# EUROPEAN PATENT APPLICATION

(11) **EP 4 796 352 A1**
(43) Date of publication of application: **26.08.2026**
(21) Application number: 24894140.3
(22) Date of filing: 19.11.2024
(51) Int. Cl.: B60H 1/00, B60H 1/22, B60H 1/32, B60L 1/00

(54) **TEMPERATURE ADJUSTMENT DEVICE FOR ELECTRIC VEHICLE**

(30) Priority: 20.11.2023 JP 2023196434
(71) Applicant: Mitsubishi Fuso Truck and Bus Corporation, Nakahara-ku, Kawasaki-shi Kanagawa 2118522 (JP)
(72) Inventor: SATO, Tasuku, Kawasaki-shi, Kanagawa 211-8522 (JP); MATSUURA, Shogo, Kawasaki-shi, Kanagawa 211-8522 (JP); WATANABE, Takashi, Kawasaki-shi, Kanagawa 211-8522 (JP); HONDA, Yuta, Kawasaki-shi, Kanagawa 211-8522 (JP); HIRAI, Shinichi, Kawasaki-shi, Kanagawa 211-8522 (JP); TAKADA, Soushi, Kawasaki-shi, Kanagawa 211-8522 (JP)
(74) Representative: Hofstetter, Schurack & Partner
(86) International application number: PCT/JP2024/040946
(87) International publication number: WO 2025/110149

(57) **Abstract**

The present disclosure includes a temperature adjustment device (1) that adjusts temperature of an interior by controlling a temperature regulator (52,72); a key operating unit (8) that turns on and off a key of an electric vehicle; a first operating unit (3) that operates and stops the temperature adjustment device (1); and a controlling device (2) that controls the temperature adjustment device (1), wherein if a predetermined condition is satisfied while the key is in an off-state, the controlling device (2) enables the first operating unit (3) to operate the temperature adjustment device (3).

## Description

### [Technical Field]

The present disclosure relates to a temperature adjustment device that adjusts the temperature of an interior of an electric vehicle.

### [Background Art]

Vehicles are provided with temperature adjustment devices for adjusting temperatures of interiors, such as drivers' cabins or cargo compartments. For example, PTL 1 discloses a refrigerated vehicle that cools a cabin or a refrigerator compartment, using an engine.

### [Citation List]

### [Patent Literature]

JP 2010-174713 A

### [Summary of Invention]

### [Technical Problem]

In recent years, electric vehicles using electric power as driving sources have been developed. These electric vehicles also cool the drivers' cabins, the cargo compartments, and the likes. For example, in a configuration in which an engine is used for cooling a cabin, a refrigerator compartment, or the like as described in PTL 1, the cooling of the cabin, the refrigerator compartment, or the like stops due to a stop of the engine when the occupant turns off the key and gets out of the vehicle. In an electric vehicle also, as in an engine vehicle, it is conceivable that the driver's cabin and the cargo compartment are not cooled while the key is off.

With the above in view, the object of the present invention is to provide a temperature adjustment device for an electric vehicle capable of adjusting the temperature of (for example, cooling) the interior even when a key is off.

### [Solution to Problem]

The present disclosure is made to solve at least part of the above problem and can be achieved by the following embodiment or application example.

A temperature adjustment device for an electric vehicle according to the present application example adjusts temperature of an interior of the electric vehicle by controlling a temperature regulator and includes: a key operating unit that turns on and off a key of the electric vehicle; a first operating unit that operates and stops the temperature adjustment device; and a controlling device that controls the temperature adjustment device, wherein if a predetermined condition is satisfied while the key is in an off-state, the controlling device enables the first operating unit to operate the temperature adjustment device.

According to the present application example, if the predetermined condition is satisfied while the key of the electric vehicle is off, the temperature adjustment device can be operated even when the key of the electric vehicle is in the off-state by enabling the first operating unit, which operates or stops the temperature adjustment device, to operate the temperature adjustment device. This makes it possible to adjust the temperature of the interior of the electric vehicle of which key is in the off-state, so that the quality of loads therein can be enhanced by keeping the temperature in a cargo compartment of a truck constant and/or the comfortability of a driver can be enhanced by keeping the temperature in a driver's cabin constant.

### [Advantageous Effects of Invention]

The present disclosure can adjust the temperature of an interior of an electric vehicle even when the key of the electric vehicle is in the off-state.

### [Brief Description of Drawings]

[FIG. 1]

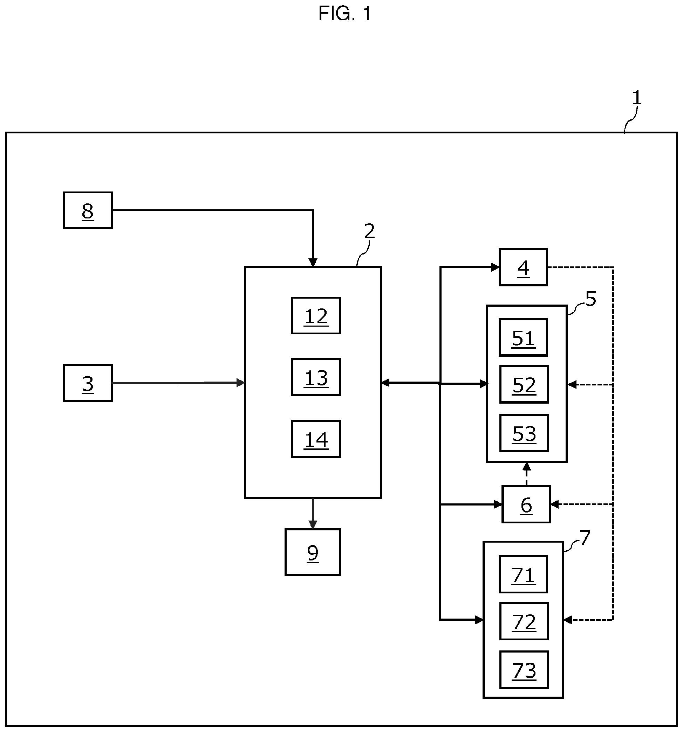

   FIG. 1 is a block diagram schematically illustrating a temperature adjustment device according to an application example.
[FIG. 2]

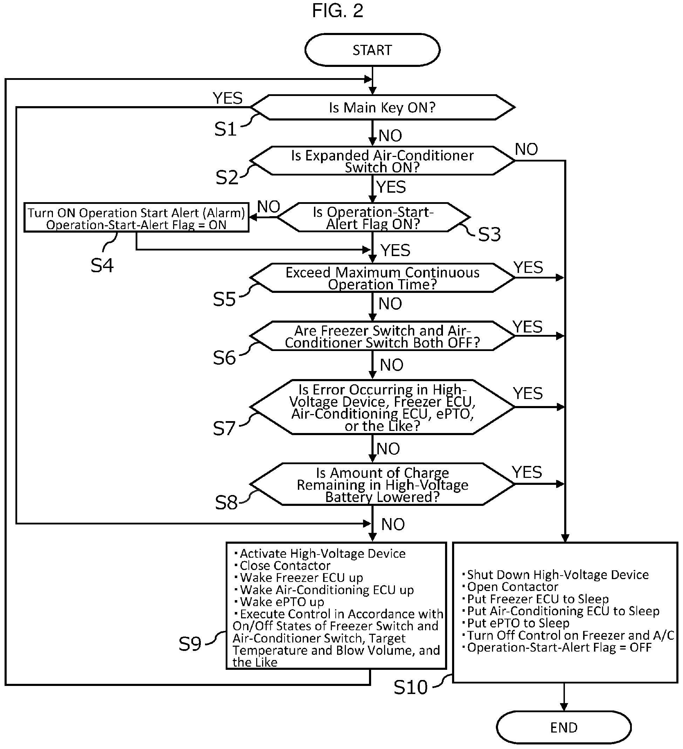

   FIG. 2 is a flow chart illustrating an example of control performed in the temperature adjustment device of FIG. 1.

### [Description of Embodiments]

With reference to the drawings, an embodiment of the present disclosure will now be described. The following embodiment is merely illustrative and is not intended to exclude the application of various modifications and techniques not explicitly described in the following embodiment. Each configuration of the embodiment can be variously modified and implemented without departing from the gist thereof. Also, each configuration can be selected or omitted according to the requirement, or can be combined appropriately.

### 1. Configuration

FIG. 1 is a block diagram schematically illustrating a temperature adjustment device 1 according to the present application example.

The temperature adjustment device 1 is applied to an electric vehicle such as a truck that uses electric power as a driving source. The temperature adjustment device 1 is a device for adjusting the temperature of an interior of a driver's cabin and/or a cargo compartment (cargo box) located behind the driver's cabin of the electric vehicle, for example. Hereinafter, an electric vehicle is sometimes referred to as a vehicle. The following example assumes that an electric vehicle such as a truck is a refrigerated vehicle provided with a refrigerator.

As shown in FIG. 1, the temperature adjustment device 1 includes a vehicle controlling ECU (Electronic Control Unit) 2, an expanded air-conditioning switch 3, a high-voltage battery unit 4, a freezer unit 5, an ePTO (electric Power Take Off) 6, an air-conditioning unit 7, a main-key operating unit 8, and a notifying device 9. In FIG. 1, the solid arrows indicate flows of signals and information, and the dashed arrows indicate flows of electric power.

The temperature adjustment device 1 is a device that adjusts the temperature of the interior of the electric vehicle by controlling a freezer 52 of the freezer unit 5 and an air conditioner 72 (hereinafter, also referred to as "A/C 72") of the air-conditioning unit 7.

The high-voltage battery unit 4 includes, for example, a high-voltage battery and a contactor which do not appear in the drawings, and supplies electric power output from the high-voltage battery to each of the freezer unit 5, the air-conditioning unit 7, and the ePTO 6. The high-voltage battery is an example of a driving battery for driving the freezer unit 5, the air-conditioning unit 7, and the ePTO 6. The high-voltage battery may be referred to as a high-voltage device.

The freezer unit 5 includes a freezer ECU 51, the freezer 52, and a freezer switch 53. Electric power supplied to the freezer unit 5 is supplied to the freezer ECU 51 and the freezer 52. Similarly, the air-conditioning unit 7 includes an air-conditioning ECU 71, the A/C 72, and an air-conditioner switch 73. Electric power supplied to the air-conditioning unit 7 is supplied to the air-conditioning ECU 71 and the A/C 72. The high-voltage battery is activated and shut down by a vehicle controlling ECU 2 to be described later. In addition, the high-voltage battery transmits information indicating an amount of charge remaining therein to the vehicle controlling ECU 2.

The contactor is an example of a switching device. When the contactor is set to a closed state, the electric power output from the high-voltage battery is supplied to the freezer unit 5, the ePTO 6 and the air-conditioning unit 7. Further, when the contactor is set to an opened state, supply of the electric power from the high-voltage battery to the freezer unit 5, the ePTO 6 and the air-conditioning unit 7 is interrupted. The opening and closing of the contactor are controlled by the vehicle controlling ECU 2 which will be detailed below. The controlling of the supply of electric power from the high-voltage battery by the vehicle controlling ECU 2 controlling opening and closing of the contactor may be simply referred to as controlling the high-voltage battery.

The freezer ECU 51 performs, for example, temperature control of the cargo compartment by controlling the operation of the freezer 52.

The freezer 52 is a device that cools the cargo compartment of the vehicle and is an example of a temperature regulator that regulates the temperature of the cargo compartment.

The freezer 52 is further provided with the freezer switch 53. The freezer 52 is operable when the freezer switch 53 is in an on-state (ON), and the freezer 52 stops when the freezer switch 53 is in an off-state (OFF). The freezer switch 53 is an example of a second operating unit that operates and stops the freezer 52 (temperature regulator). The state in which the freezer switch 53 is turned on is an example of a state in which the freezer switch 53 (second operating unit) operates the freezer 52 (temperature regulator).

The freezer ECU 51 notifies the vehicle controlling ECU 2 of the operation status (e.g., a start of operation and an end of operation) of the freezer 52.

The freezer switch 53 may be arranged in the driver's cabin or may be arranged in the cargo compartment of a cargo box. The freezer switch 53 is operated by, for example, a driver. The setting status of the freezer switch 53 is notified to the vehicle controlling ECU 2 to be detailed below.

The ePTO 6 is a device that takes out power of a traveling motor of the vehicle, and supplies the taken-out power to, for example, the freezer 52. The freezer 52 uses the power supplied from the ePTO 6 to, for example, operate a non-illustrated compressor to compress refrigerant gas and cools the cargo compartment by utilizing the temperature change in the gas caused by the compression.

The air-conditioning ECU 71 performs, for example, temperature control of the driver's cabin by controlling the operation of the A/C 72. The A/C 72 is a device that regulates the temperature of the driver's cabin (cab interior) of the vehicle by cooling and heating, and is an example of a temperature regulator that regulates the temperature in the driver's cabin. The A/C 72 may be referred to as an air-conditioning device of the driver's cabin.

The air-conditioning ECU 71 notifies the vehicle controlling ECU 2 of the operation status (e.g., a start of operation and an end of operation) of the A/C 72.

The A/C 72 is provided with the air-conditioner switch 73. The A/C 72 is operable when the air-conditioner switch 73 is in the on-state (ON), and the A/C 72 stops when the air-conditioner switch 73 is in the off-state (OFF). The air-conditioner switch 73 is an example of a second operating unit that operates and stops the A/C 72 (temperature regulator). Furthermore, a state where the air-conditioner switch 73 is in the on-state is an example of a state where the air-conditioner switch 73 (second operating unit) operates the A/C 72 (temperature regulator).

The air-conditioner switch 73 may be arranged in the driver's cabin. The air-conditioner switch 73 is operated by, for example, the driver. The setting status of the air-conditioner switch 73 is notified to the vehicle controlling ECU 2.

The main-key operating unit 8 is a device for the driver or the like to input operation for controlling on/off of the main key (key) of the vehicle. Turning on the main key in the vehicle can turn on the main power and unlock the door.

For example, turning on the main key may turn on the main power, and turning off the main key may turn off the main power. Furthermore, turning on the main key may unlock the door, and turning off the main key may lock the door.

The main-key operating unit 8 may include, for example, a smart entry system and may include a physical key or a main power button.

Information related to operation regarding on/off of the main key performed on the main-key operating unit 8 is notified to the vehicle controlling ECU 2.

When the expanded air-conditioning switch 3 is set to on and the temperature adjustment device 1 starts its operation, the notifying device 9 outputs, to the driver or the like, an operation start alert indicating that the temperature adjustment device 1 starts its operation.

The notifying device 9 may include, for example, a display device, and may display a message indicating that the temperature adjustment device 1 starts its operation on this display device. In addition, the notifying device 9 may include, for example, a speaker, and may output alert sound indicating that the temperature adjustment device 1 starts its operation from this speaker.

The notifying device 9 outputs the operation start alert under the control of a notification controlling unit 14 to be described below. The notifying device 9 notifies the start of operation of the temperature adjustment device 1 to the operator (e.g., the driver) of the main-key operating unit 8 (first operating unit).

The expanded air-conditioning switch 3 is a switch for controlling the enablement/disablement of the temperature adjusting function under the state where the main key of the vehicle is off, and is arbitrarily operated by the driver or the like. In order to operate the air-conditioning unit 7 and/or the freezer unit 5 under a state where the main key is off, the driver or the like sets the expanded air-conditioning switch 3 to on. In order not to operate the air-conditioning unit 7 and/or the freezer unit 5 under the state where the main key is off, the driver or the like sets the expanded air-conditioning switch 3 to off.

Hereinafter, to perform temperature adjustment in the vehicle under the state where the main key is off may be referred to as expanded temperature adjustment. The expanded air-conditioning switch 3 may be regarded as a switch for setting whether or not to perform the expanded temperature adjustment. The setting status of the expanded air-conditioning switch 3 is notified to the vehicle controlling ECU 2.

The expanded air-conditioning switch 3 is an example of a first operating unit that operates and stops the temperature adjustment device 1.

The expanded air-conditioning switch 3 may be arranged, for example, in the driver's cabin or may be installed in the cargo compartment. Further, the expanded air-conditioning switch 3 may be arranged on the exterior of the vehicle. Further, multiple expanded air-conditioning switches 3 may be arranged at multiple positions of the vehicle. The expanded air-conditioning switch 3 (first operating unit) is arranged in at least in the driver's cabin or on a vehicle outer surface.

Further, the function of the expanded air-conditioning switch 3 may be achieved by using, for example, telematics, which is connected to the vehicle via a communication system and achieves various functions. The expanded air-conditioning switch 3 may be, for example, an application switch achieved by an application installed in an electronic device such as a smartphone.

In other words, the expanded air-conditioning switch 3 (first operating unit) may be implemented by a terminal device capable of operating the temperature adjustment device 1 via radio communication.

The vehicle controlling ECU 2 controls the high-voltage battery unit 4, the freezer ECU 51, the ePTO 6, and the air-conditioning ECU 71. The vehicle controlling ECU 2 is an example of a controlling device that controls the temperature adjustment device 1 such as the freezer ECU 51 and the air-conditioning ECU 71, for example.

As shown in FIG. 1, the vehicle controlling ECU 2 has functions as a confirming unit 12, an operation controlling unit 13, and the notification controlling unit 14.

The confirming unit 12 confirms the respective setting statuses (inputting statuses) of the main-key operating unit 8, the expanded air-conditioning switch 3, the freezer switch 53, and the air-conditioner switch 73 provided to the temperature adjustment device 1.

The confirming unit 12 may store the acquired values representing the statuses of the respective switches into a predetermined storing region such as a non-illustrated memory. The values representing the statuses of the respective switches may each be a flag, for example.

In addition, the confirming unit 12 confirms whether an operation-start-alert flag is set to on. The operation-start-alert flag is a flag indicating that the temperature adjustment device 1 has started the temperature adjustment in the cargo compartment and/or the driver's cabin by using the freezer 52 and/or the A/C 72, and is set by the operation controlling unit 13 to be detailed below. The operation-start-alert flag is set in, for example, a predetermined storing region such as a non-illustrated memory.

The operation controlling unit 13 adjusts the temperature of the interior such as the driver's cabin or the cargo compartment by controlling the high-voltage battery unit 4, the freezer ECU 51, the ePTO 6, and the air-conditioning ECU 71. The operation controlling unit 13 controls each unit according to, for example, the status of each switch confirmed by the confirming unit 12.

For example, the operation controlling unit 13 performs control to execute the expanded temperature adjustment when the expanded air-conditioning switch 3 is set to on under a state where the main key has been turned off by the main-key operating unit 8 (key operating unit). This means that the expanded air-conditioning switch 3 is a switch for controlling the enablement/disablement of the temperature adjusting function when the main key of the vehicle is in the off-state.

In the expanded temperature adjustment, the operation controlling unit 13 activates the high-voltage battery by sending a signal instructing activation (wake-up) of the high-voltage battery to the high-voltage battery unit 4. Then, the operation controlling unit 13 causes the high-voltage battery unit 4 to supply electric power to each of the freezer unit 5, the ePTO 6, and the air-conditioning unit 7.

The operation controlling unit 13 activates the freezer ECU 51, the air-conditioning ECU 71, and the ePTO 6. The activation of the ePTO 6 makes it possible to supply electric power from the ePTO 6 to the freezer unit 5.

Under a state where the expanded air-conditioning switch 3 is set to on even when the main key of the vehicle is in the off-state, the operation controlling unit 13 achieves cooling the inside of the cargo compartment using the freezer 52 or temperature adjustment of the driver's cabin using the A/C 72 by carrying out control such that the electric power is supplied to the freezer unit 5, the ePTO 6, and the air-conditioning unit 7.

In addition, the operation controlling unit 13 disables the expanded temperature adjustment when at least one of multiple (four) suppression conditions exemplified below is satisfied. Disablement of the expanded temperature adjustment is an example of disabling the expanded air-conditioning switch 3 (first operating unit) from operating the temperature adjustment device 1.

(Suppression condition 1) The freezer switch 53 or the air-conditioner switch 73 is off.

Under a state where the freezer switch 53 in the freezer unit 5 is off, the operation controlling unit 13 does not activate the freezer ECU 51. The operation controlling unit 13 activates the freezer ECU 51 only in a case where the freezer switch 53 is on. A state (on-state) in which the freezer switch 53 (second operating unit) operates the freezer 52 (temperature regulator) is an example of a predetermined condition.

Under a state where the air-conditioner switch 73 in the air-conditioning unit 7 is off, the operation controlling unit 13 does not activate the air-conditioning ECU 71. The operation controlling unit 13 activates the air-conditioning ECU 71 only in a case where the air-conditioner switch 73 is on. This means that a state (on-state) in which the air-conditioner switch 73 (second operating unit) operates the A/C 72 (temperature regulator) is also an example of a predetermined condition.

When both the freezer switch 53 and the air-conditioner switch 73 are off, the operation controlling unit 13 disables the expanded temperature adjustment.

(Suppression condition 2) The elapsed time after the start of operation of the freezer 52 or the A/C 72 is a predetermined time period or longer.

Here, the vehicle controlling ECU 2 has a non-illustrated timer function, and may measure a continuous operation time of the freezer 52 and the A/C 72 on the basis of information indicating an operation status (start and end of operation) of the freezer 52 transmitted from the freezer ECU 51 and information indicating an operation status (e.g., start and end of operation) of the A/C 72 transmitted from the air-conditioning ECU 71.

The operation controlling unit 13 stops the freezer 52 or the A/C 72 after a lapse of a predetermined time period (maximum continuous operation time) from the start of operation of the freezer 52 or the A/C 72. This means that, when the elapsed time (continuous operation time) from the start of the operation of the freezer 52 or the A/C 72 exceeds the maximum continuous operation time, the operation controlling unit 13 stops the freezer 52 or the A/C 72 and disables the expanded temperature adjustment.

Here, if the continuous operation time of either one of the freezer 52 or the A/C 72 is detected to be the predetermined time period or longer, the operation controlling unit 13 may stop only the temperature regulator that has been detected to continuously operate for the predetermined time period or longer, or may stop all the temperature regulators (i.e., both the freezer 52 and the A/C 72).

By stopping at least either one of the freezer 52 or the A/C 72 if the continuous operation time of a temperature regulator is detected to be the predetermined time period or longer, consumed electric power can be reduced and the high-voltage battery can be protected.

(Suppression condition 3) An error is detected in any of the high-voltage device, the freezer ECU 51, the ePTO 6, and the air-conditioning ECU 71.

If an error is detected in any of the high-voltage device, the freezer ECU 51, and the air-conditioning ECU 71, the operation controlling unit 13 stops the freezer 52 or the A/C 72 and disables the expanded temperature adjustment.

(Suppression condition 4) The amount of charge remaining in the high-voltage battery is a predetermined value or less.

If the amount (battery remaining amount) of charge remaining in the high-voltage battery is a predetermined value or less, the operation controlling unit 13 stops the freezer 52 or the A/C 72. This means that if the amount (battery remaining amount) of charge remaining in the high-voltage battery is a predetermined value or less, the operation controlling unit 13 stops the freezer 52 or the A/C 72 and disables the expanded temperature adjustment.

If the amount of charge remaining in the high-voltage battery is detected to be the predetermined value or less, the operation controlling unit 13 may stop all the temperature regulators (both the freezer 52 and the A/C 72).

In addition, the operation controlling unit 13 sets the operation-start-alert flag to on when starting the temperature adjustment in the cargo compartment and/or the driver's cabin using the freezer 52 and/or the A/C 72.

The notification controlling unit 14 controls an output from the notifying device 9. For example, if the expanded air-conditioning switch 3 is set to on and the expanded temperature adjustment by the vehicle controlling ECU 2 is started under a state where the main-key operating unit 8 has turned off the main key of the vehicle, the notification controlling unit 14 causes the notifying device 9 to output the operation start alert indicating that the temperature adjustment device 1 starts its operation.

The operation start alert may be implemented by, for example, a warning sound. If the notifying device 9 includes a speaker, alert sound indicating the start of the operation of the temperature adjustment device 1 is sounded (output) from this speaker.

The operation start alert is not limited to the alert sound. Alternatively, if the notifying device 9 includes a display device, the notification controlling unit 14 may display, as the operation start alert, a message indicating that the temperature adjustment device 1 starts its operation on this display device.

The notification controlling unit 14 causes the notifying device 9 to make notification when the expanded air-conditioning switch 3 (first operating unit) operates the temperature adjustment device 1.

Under a state where the main-key operating unit 8 (key operating unit) has turned on the main key of the vehicle, the operation controlling unit 13 implements air-conditioning control using the freezer unit 5 and/or the air-conditioning unit 7 regardless of the on/off status of the expanded air-conditioning switch 3.

Specifically, the operation controlling unit 13 activates the high-voltage device (high-voltage battery) and sets the contactor to the closed state. Furthermore, the operation controlling unit 13 wakes up the freezer ECU 51, the air-conditioning ECU 71, and the ePTO 6.

Further, the operation controlling unit 13 causes the freezer ECU 51 to control the freezer 52 in accordance with the setting status (on/off) of the freezer switch 53, target temperature, and a target blow volume, for example. Further, the operation controlling unit 13 causes the air-conditioning ECU 71 to control the A/C 72 in accordance with the setting status (on/off) of the air-conditioner switch 73, target temperature, and a target blow volume, for example.

### 2. Control

FIG. 2 is a flow chart illustrating an example of control performed in the temperature adjustment device 1 of FIG. 1.

The process illustrated in the flow chart of FIG. 2 may be started, for example, when the vehicle controlling ECU 2 is activated, and may be periodically repeated.

In Step S1, the confirming unit 12 of the vehicle controlling ECU 2 confirms whether the main key is on (main key ON) in the main-key operating unit 8. If the main key is not on (NO in Step S1), the confirming unit 12 confirms in Step S2 whether the expanded air-conditioning switch 3 is on.

When the expanded air-conditioning switch 3 is on (YES in Step S2), the confirming unit 12 confirms in Step S3 whether the operation-start-alert flag is set to on (ON). If the operation-start-alert flag is not set to on (NO in Step S3), the notification controlling unit 14 causes the notifying device 9 to sound an alert sound indicating the operation start alert (operation start alert ON) in Step S4. In addition, the operation controlling unit 13 sets the operation-start-alert flag to on. Then, the process proceeds to Step S5.

Also, if the operation-start-alert flag is set to on as a result of the confirmation in Step S3 (YES in Step S3), the process proceeds to Step S5.

In Step S5, the operation controlling unit 13 confirms whether the elapsed time from the start of the operation of the freezer 52 or the A/C 72 exceeds the maximum continuous operation time. If the elapsed time from the start of the operation of the freezer 52 or the A/C 72 does not exceed the maximum continuous operation time (NO in Step S5), the process proceeds to Step S6.

In Step S6, the confirming unit 12 confirms whether the freezer switch 53 and the air-conditioner switch 73 are off. If at least one of the freezer switch 53 or the air-conditioner switch 73 is on (NO in Step S6) as the result of the confirmation, the operation controlling unit 13 confirms in Step S7 whether an error is occurring in any of the high-voltage device, the freezer ECU 51, the ePTO 6, and the air-conditioning ECU 71.

If no error is occurring in all the high-voltage device, the freezer ECU 51, the ePTO 6, and the air-conditioning ECU 71 (NO in Step S7), the operation controlling unit 13 confirms the amount (battery capacity) of charge remaining in the high-voltage battery in Step S8. The operation controlling unit 13 confirms whether the amount of charge remaining in the high-voltage battery is lowered to the predetermined value or less. If the amount of charge remaining in the high-voltage battery is not lowered to the predetermined value or less (NO in Step S8), the procedure proceeds to Step S9.

In Step S9, the operation controlling unit 13 adjusts the temperature in the driver's cabin of the vehicle and/or cools the inside of the cargo compartment. Specifically, for example, the operation controlling unit 13 activates the high-voltage device (high-voltage battery) and sets the contactor into the closed state. The operation controlling unit 13 wakes up the freezer ECU 51, the air-conditioning ECU 71, and the ePTO 6.

Further, the operation controlling unit 13 causes the freezer ECU 51 to control the freezer 52 in accordance with the setting status (on/off) of the freezer switch 53, target temperature, and a target blow volume, for example. Further, the operation controlling unit 13 causes the air-conditioning ECU 71 to control the A/C 72 in accordance with a setting status (on/off) of the air-conditioner switch 73, target temperature, and a target blow volume, for example. Then, the process returns to Step S1.

In addition, if the main key is on (main key ON) in the main-key operating unit 8 as a result of the confirmation in Step S1 (YES in Step S1), the process proceeds to Step S9.

Further, if the expanded air-conditioning switch 3 is off (NO in Step S2) as a result of the confirmation in Step S2, the process proceeds to Step S10.

In addition, if the elapsed time from the start of the operation of the freezer 52 or the A/C 72 exceeds the maximum continuous operation time (YES in Step S5) as a result of the confirmation in Step S5, the process proceeds to Step S10.

Furthermore, if the freezer switch 53 and the air-conditioner switch 73 are both off (YES in Step S6) as a result of the confirmation in Step S6, if an error is occurring in any of the high-voltage device, the freezer ECU 51, the ePTO 6, and the air-conditioning ECU 71 (YES in Step S7) as a result of the confirmation in Step S7, or if the amount of charge remaining in the high-voltage battery is lowered to the predetermined value or less (YES in Step S8) as a result of the confirmation in the step S8, the process proceeds to Step S10.

In Step S10, the operation controlling unit 13 stops the temperature adjustment of the driver's cabin of the vehicle and/or the cooling of the inside of the cargo compartment. Specifically, for example, the operation controlling unit 13 shuts down the high-voltage device (high-voltage battery) and sets the contactor to the opened state. In addition, the operation controlling unit 13 puts the freezer ECU 51, the air-conditioning ECU 71, and the ePTO 6 to sleep. Further, the operation controlling unit 13 causes the freezer ECU 51 to turn off the control of the freezer 52 and causes the air-conditioning ECU 71 to turn off the control of the A/C 72.

In addition, the operation controlling unit 13 sets the operation-start-alert flag to off. Then, the process ends.

### 3. Action and Effect

The present embodiment described above brings the following actions and effects.

In the temperature adjustment device 1 according to this application example, if the expanded air-conditioning switch 3 is set to on under a state where the main key of the vehicle is off, the operation controlling unit 13 carries out the expanded temperature adjustment and thereby carries out temperature adjustment of the vehicle.

Specifically, under a state where the expanded air-conditioning switch 3 is set to on even when the main key of vehicle is in the off-state, the operation controlling unit 13 carries out control such that the electric power is supplied to the freezer unit 5, the ePTO 6, and the air-conditioning unit 7. Accordingly, even when the main key is in the off-state in the vehicle, it is possible to achieve the cooling of the inside of the cargo compartment by the freezer 52 and the temperature adjustment of the driver's cabin by the A/C 72.

By cooling the inside of the cargo compartment in the vehicle using the freezer 52 under the state where the main key is off, the temperature in a freezing compartment can be kept constant and the quality of the loads can be enhanced. Further, by performing the temperature adjustment in the driver's cabin by the A/C 72 under the state where the main key is off, the temperature in the driver's cabin can be kept constant and the comfortability of the driver can be enhanced.

Further, since the cooling of the inside of the cargo compartment by the freezer 52 and the temperature adjustment of the driver's cabin by the A/C 72 can be achieved even when the main key is in the off-state, the cooling of the cargo compartment by the freezer 52 and the temperature adjustment of the driver's cabin by the A/C 72 can be achieved under a state where the vehicle is locked when the driver leaves the vehicle to collect and deliver a load, for example.

Furthermore, when the elapsed time (continuous operation time) from the start of the operation of the freezer 52 or the A/C 72 exceeds the maximum continuous operation time, the operation controlling unit 13 stops the freezer 52 or the A/C 72 and disables the expanded temperature adjustment. This can reduce consumed electric power and protect the high-voltage battery.

In addition, if an error is detected in any of the high-voltage device, the freezer ECU 51, the ePTO 6, and the air-conditioning ECU 71, the operation controlling unit 13 stops the freezer 52 or the A/C 72 and disables the expanded temperature adjustment. This can prohibit occurrence of a secondary failure caused by the error.

Furthermore, if the amount (battery remaining amount) of charge remaining in the high-voltage battery is the predetermined value or less, the operation controlling unit 13 stops the freezer 52 or the A/C 72 and disables the expanded temperature adjustment. This can protect the high-voltage battery.

### 4. Miscellaneous

The temperature adjustment device 1 described in the above embodiment is exemplary. For example, the temperature adjustment device 1 includes the freezer unit 5 and the air-conditioning unit 7, but is not limited to this. Alternatively, the temperature adjustment device 1 may include at least one of the freezer unit 5 or the air-conditioning unit 7. In addition, the temperature adjustment device 1 may include a temperature regulator other than the freezer unit 5 and the air-conditioning unit 7.

In the above-described embodiment, the suppression conditions 1 to 4 are exemplified as the conditions for disabling the expanded temperature adjustment by the operation controlling unit 13, but the conditions are not limited to these. The suppression conditions may include a condition other than the above suppression conditions 1 to 4.

Further, as shown in FIG. 2, when the main key is on (YES in Step S1), the above-described embodiment activates the high-voltage device and closes the contactor in Step S9, but is not limited thereto. Alternatively, a starter switch (not shown) may be provided in addition to the main key and when the main key is turned on and also the starter switch is turned on, the high-voltage device may be activated and the contactor may be closed in Step S9. This means that the YES condition in Step S1 may further include turning-on the starter switch in addition to turning-on the main key.

The above-described embodiment uses the driving battery (high-voltage battery) for electric power supply to the temperature regulators (the freezer 52 and the A/C 72), but is not limited thereto. Alternatively, an electric power source such as another battery may be provided and may supply electric power to the temperature regulators and the likes.

Further alternatively, the temperature regulator such as the freezer 52 may be driven by electric power generated by a device such as another motor other than the ePTO.

Further, the above embodiment assumes that the electric vehicle is a truck that uses electric power as a driving power source, but the electric vehicle is not limited thereto. Alternatively, the electric vehicle may be a passenger car that uses electric power as the driving power source. Further, the electric vehicle may be a fuel cell vehicle including a driving battery.

Furthermore, the electric vehicle can be any vehicle that uses electric power as at least a part of the driving power source, and may be, for example, a vehicle including only a driving battery as the driving power source or a hybrid vehicle including an engine and a driving battery.

Further, the above-described embodiment includes the freezer 52 as an example of the temperature regulator that regulates the temperature in the cargo compartment, but is not limited thereto. The temperature adjustment of the cargo compartment by the temperature adjustment device 1 may keep the temperature or raise the temperature instead of cooling the loads. For example, the cargo compartment may be partitioned so as to have a part to be frozen and a part to be cooled and not frozen. Alternatively, the cargo compartment may only be frozen or only be cooled and not frozen.

Further, the above-described embodiment shows an example in which the ePTO takes out the power from the traveling motor, but is not limited to this. In place of taking out the power from the traveling motor, another motor may be used as the ePTO. Also in this alternative, the electric power output from this high-voltage battery can be shared with this ePTO.

The above-described embodiment has a timer function. However, the maximum continuous operation time, which is the time for disabling the expanded temperature adjustment, may be changed to an arbitrary time. In this instance, for example, the maximum continuous operation time may be changed with at least one of an operating unit (e.g., a meter cluster, a touch panel, a dial) in the driver's cabin, a terminal device capable of operating the temperature adjustment device 1 via radio communication, and an operating unit (e.g., a touch panel, a dial) provided on a vehicle outer surface. Further, the maximum continuous operation time may be changed for each temperature regulator, i.e., for each of the freezer 52 and the A/C 72.

Furthermore, the above embodiment describes an example in which the freezer 52 and the A/C 72 are provided as examples of the temperature regulators, but is not limited to this. The temperature regulator may be a device other than the freezer 52 and the A/C 72, or may be either one of the freezer 52 or the A/C 72, and may be variously modified.

Further, the first operating unit (the expanded air-conditioning switch 3) of the above embodiment is provided in the temperature adjustment device 1 separately from the freezer unit 5 and the air-conditioning unit 7, but is not limited to this. Alternatively, the first operating units may be provided one to each of the temperature regulators (e.g., the freezer 52 and the A/C 72). Furthermore, in the temperature adjustment device 1, the second operating unit (the freezer switch 53 and the air-conditioner switch 73) may be provided independently from the freezer unit 5 and the air-conditioning unit 7.

Furthermore, in the embodiment described above, the first operating unit (the expanded air-conditioning switch 3) and the second operating unit (the freezer switch 53, the air-conditioner switch 73) may be a common operating unit. For example, the first operating unit (the expanded air-conditioning switch 3) and the second operating unit (the freezer switch 53) may be a common operating unit A, and the first operating unit (the expanded air-conditioning switch 3) and the second operating unit (the air-conditioner switch 73) may be a common operating unit B. In this alternative, if the operating unit A and the operating unit B are both on when the key is on, the function of the expanded air-conditioning switch 3 of either one of the operating unit A or the operating unit B is enabled in response to key off, so that the operation of the freezer unit 5 and/or the air-conditioning unit 7 can be continued.

In this alternative, the first operating unit (the expanded air-conditioning switch 3) included in the operating unit A may be associated only with the second operating unit (the freezer switch 53) included in the same operating unit A, and the first operating unit (the expanded air-conditioning switch 3) included in the operating unit B may be associated only with the second operating unit (the air-conditioner switch 73) included in the same operating unit B. In this association, for example, if at least one of the first operating units (the expanded air-conditioning switches 3) of the operating unit A and the operating unit B is set to on when the key is on, the function of the first operating unit (the expanded air-conditioning switch 3) which is set to on is enabled, so that the operation of the temperature regulator (the freezer unit 5 or the air-conditioning unit 7) associated with the first operating unit (expanded air-conditioning switch 3) which has been turned on can be selectively continued.

Further, for example, if the operating unit A and the operating unit B are turned from the off-state to the on-state when the key is off, the functions of the respective expanded air-conditioning switches 3 can be enabled. With this configuration, even if the key is turned off while the operating unit A or the operating unit B is kept on, the operation of the freezer unit 5 by the operating unit A and the operation of the air-conditioning unit 7 by the operating unit B are temporarily stopped, so that forgetting to stop the operation of the freezer unit 5 and the air-conditioning unit 7 when the key is off can be prevented.

Further, for example, the operating unit A and the operating unit B may be arranged in at least one of the inside of the driver's cabin or the vehicle outer surface.

Further, for example, the operating unit A and the operating unit B may be operated by a terminal device via radio communication.

### 5. Appendix

### (Appendix 1)

A temperature adjustment device for an electric vehicle, the temperature adjustment device adjusting temperature of an interior of the electric vehicle by controlling a temperature regulator, the temperature adjustment device comprising:
a key operating unit that turns on and off a key of the electric vehicle;
a first operating unit that operates and stops the temperature adjustment device; and
a controlling device that controls the temperature adjustment device, wherein
if a predetermined condition is satisfied while the key is in an off-state, the controlling device enables the first operating unit to operate the temperature adjustment device.

### (Appendix 2)

The temperature adjustment device according to appendix 1, further comprising
a second operating unit that operates or stops the temperature regulator, wherein
the predetermined condition is a state where the second operating unit operates the temperature regulator.

### (Appendix 3)

The temperature adjustment device according to appendix 1 or 2, wherein
the controlling device stops the temperature adjustment device after a lapse of a predetermined time period from a start of operation of the temperature regulator.

### (Appendix 4)

The temperature adjustment device according to any one of appendices 1 to 3, wherein if an amount of charge remaining in a driving battery is a predetermined value or less, the controlling device disables the first operating unit from operating the temperature adjustment device.

### (Appendix 5)

The temperature adjustment device according to any one of appendices 1 to 4, further comprising
a notifying device that notifies a start of operation of the temperature adjustment device to an operator of the first operating unit, wherein
when the first operating unit operates the temperature adjustment device, the controlling device causes the notifying device to notify the operator of the start.

### (Appendix 6)

The temperature adjustment device according to any one of appendices 1 to 5, wherein
the first operating unit is arranged at least in a driver's cabin or on a vehicle outer surface.

### (Appendix 7)

The temperature adjustment device according to any one of appendices 1 to 6, wherein
the first operating unit is a terminal device capable of operating the temperature adjustment device through radio communication.

### (Appendix 8)

The temperature adjustment device according to any one of appendices 1 to 7, wherein
the interior is a driver's cabin.

### (Appendix 9)

The temperature adjustment device according to one of appendices 1-8, wherein
the interior is a cargo compartment.

### (Appendix 10)

The temperature adjustment device according to any one of appendices 1 to 9, wherein
the electric vehicle is a refrigerated vehicle.

### [Reference Signs List]

1: Temperature adjustment device
2: Vehicle controlling ECU (controlling device)
3: Expanded air-conditioning switch (first operating unit)
4: High-voltage battery unit
5: Freezer unit
6: ePTO
7: Air-conditioning unit
8: Main-key operating unit (key operating unit)
9: Notifying device
12: Confirming unit
13: Operation controlling unit
14: Notification controlling unit
51: Freezer ECU
52: Freezer (temperature regulator)
53: Freezer switch (second operating unit)
71: Air-conditioning ECU
72: A/C (temperature regulator)
73: Air-conditioner switch (second operating unit)

## Claims

1. A temperature adjustment device for an electric vehicle, the temperature adjustment device adjusting temperature of an interior of the electric vehicle by controlling a temperature regulator, the temperature adjustment device comprising:
a key operating unit that turns on and off a key of the electric vehicle;
a first operating unit that operates and stops the temperature adjustment device; and
a controlling device that controls the temperature adjustment device, wherein
if a predetermined condition is satisfied while the key is in an off-state, the controlling device enables the first operating unit to operate the temperature adjustment device.

2. The temperature adjustment device according to claim 1, further comprising
a second operating unit that operates or stops the temperature regulator, wherein
the predetermined condition is a state where the second operating unit operates the temperature regulator.

3. The temperature adjustment device according to claim 1, wherein
the controlling device stops the temperature adjustment device after a lapse of a predetermined time period from a start of operation of the temperature regulator.

4. The temperature adjustment device according to claim 1, wherein
if an amount of charge remaining in a driving battery is a predetermined value or less, the controlling device disables the first operating unit from operating the temperature adjustment device.

5. The temperature adjustment device according to claim 1, further comprising
a notifying device that notifies a start of operation of the temperature adjustment device to an operator of the first operating unit, wherein
when the first operating unit operates the temperature adjustment device, the controlling device causes the notifying device to notify the operator of the start.

6. The temperature adjustment device according to claim 1, wherein
the first operating unit is arranged at least in a driver's cabin or on a vehicle outer surface.

7. The temperature adjustment device according to claim 1, wherein
the first operating unit is a terminal device capable of operating the temperature adjustment device through radio communication.

8. The temperature adjustment device according to claim 1, wherein
the interior is a driver's cabin.

9. The temperature adjustment device according to claim 1, wherein
the interior is a cargo compartment.

10. The temperature adjustment device according to claim 1, wherein
the electric vehicle is a refrigerated vehicle.
